(19) Europäisches Patentamt
European Patent Office
Office européen des brevets

(11) **EP 2 564 175 B1**

(12) **EUROPÄISCHE PATENTSCHRIFT**

(45) Veröffentlichungstag und Bekanntmachung des Hinweises auf die Patenterteilung:
**12.12.2018   Patentblatt 2018/50**

(21) Anmeldenummer: **10759930.0**

(22) Anmeldetag: **01.10.2010**

(51) Int Cl.:
*G01L 1/24* *(2006.01)*     *G01M 11/00* *(2006.01)*
*G01D 5/353* *(2006.01)*     *G01N 21/43* *(2006.01)*

(86) Internationale Anmeldenummer:
**PCT/EP2010/064676**

(87) Internationale Veröffentlichungsnummer:
**WO 2011/134540 (03.11.2011 Gazette 2011/44)**

(54) **VORRICHTUNG UND VERFAHREN ZUR QUASI-VERTEILTEN MESSUNG EINER MEßGRÖßE**

DEVICE AND METHOD FOR MEASURING A MEASURED VARIABLE IN A QUASI-DISTRIBUTED MANNER

DISPOSITIF ET PROCÉDÉ DE MESURE QUASI-DISTRIBUÉE D'UNE GRANDEUR DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2010   DE 102010016640**

(43) Veröffentlichungstag der Anmeldung:
**06.03.2013   Patentblatt 2013/10**

(73) Patentinhaber: **Bundesanstalt Für Materialforschung Und -Prüfung (BAM)**
**12205 Berlin (DE)**

(72) Erfinder: **LIEHR, Sascha**
**12051 Berlin (DE)**

(74) Vertreter: **Zimmermann & Partner Patentanwälte mbB**
**Postfach 330 920**
**80069 München (DE)**

(56) Entgegenhaltungen:
| | |
|---|---|
| EP-A1- 1 524 509 | EP-A1- 1 640 692 |
| EP-A2- 2 017 593 | WO-A2-2005/106396 |
| WO-A2-2007/149230 | US-A1- 2007 051 882 |
| US-A1- 2009 240 455 | US-B1- 7 573 565 |

**Beschreibung**

Die vorliegende Erfindung betrifft eine Vorrichtung sowie ein zugehöriges Verfahren quasiverteilten Messung einer Meßgröße, insbesondere mittels einer Sensorfaser.

Viele Bauteile und Bauwerke, die dynamischen Belastungen ausgesetzt sind, lassen sich durch herkömmliche Sensorik nicht zur Zufriedenheit überwachen. Punktuelle Sensoren, wie etwa Dehnungsmeßstreifen (DMS) oder Faser-Bragg-Gitter (FBG) liefern zwar schnell und genau Dehnungswerte für bestimmte Punkte, ihnen fehlt jedoch die Meßbasis, um integrative Längenänderungen, d.h. Längenänderungen zwischen zwei Punkten, zu erfassen.

Weiterhin sind faseroptische Sensoren auf Basis direkter Phasenmessung eines intensitätsmodulierten Signals in Transmission bekannt. Diese Systeme sind ebenfalls in der Lage, Längenänderungen hochfrequent und genau zu messen. Jedoch können diese Sensoren nur die Gesamtlängenänderung entlang der Faser ermitteln, nicht aber die Längenänderung definierter Faserabschnitte.

Weiterhin sind die sogenannte Optische Zeitbereichsreflektometrie (OTDR-Technik) und die Optische Frequenzbereichsreflektometrie (OFDR-Technik) als Dehnungsmeßverfahren bekannt. Mit Hilfe der OTDR-Technik bzw. der OFDR-Technik können Reflektionsstellen relativ genau gemessen werden. Jedoch benötigen die OTDR-Technik bzw. die OFDR-Technik eine vergleichsweise lange Meßzeit, die die Anwendung dieser beiden Techniken für dynamische Anwendungen ausschließt.

Weiterhin ist eine Vorrichtung zur Brillouin-Frequenzbereichsanalyse aus der WO 2007/131794 bekannt. Darin wird ein Überwachungssystem beschrieben, das mittels Brillouin-Frequenzbereichsanalyse die Dehnung einer optischen Faser überwacht, um beispielsweise Veränderungen in einem Deich oder einer ähnlichen sicherheitsrelevanten Struktur zu erkennen.

Ebenfalls ist eine Vorrichtung zur Brillouin-Frequenzbereichsanalyse aus dem Fachartikel "Brillouin optical-fiber frequency-domain analysis for distributed temperature and strain measurements" von Garus et al., Journal of Lightwave Technology, Bd. 15, Nr. 4, Seiten 654 bis 662, 1997, bekannt. Weiterhin ist eine Vorrichtung zur Brillouin-Frequenzbereichsanalyse aus dem Fachartikel "Distributed fiber-optic frequency-domain Brillouin sensing" von Bernini et al., Sensors and Actuators A: Physical, Vol. 123-124, Eurosensors XVIII 2004 - The 18th European conference on Solid-State Transducers, Seiten 337-342, 2005, bekannt.

Zudem sind faseroptische Sensoren bekannt, die andere Meßgrößen als die Dehnung erfassen. Solche Sensoren sind beispielsweise beschrieben in "Fiber-Optic Chemical Sensors" von Arnold, Anal. Chem., Bd. 64, Nr. 21, November 1992, Seiten 1015-1025, oder in dem Artikel "Sensing application for POF and hybrid fibres using a photon counting OTDR" von Saunders und Scully, Meas. Sci. Technol. Bd. 18, 2007, Seiten 615 -622. Die Arbeitsweise solcher Sensoren beruht typischerweise darauf, daß sie die Leistung des an ihnen reflektierten Lichts vermindern. Jedoch sind solche Systeme typischerweise nicht in der Lage, die jeweiligen Meßgrößen hochfrequent und genau zu messen.

Aus US 2009/240455 ist ein Verfahren zur Kalibrierung eines optischen FMCW Rückstreu-Mess-Systems bekannt, während in WO 2007/149230 ein System zur verteilten Dehnungs- und Temperatur-Unterscheidung in einer polarisations-erhaltenden (PM) Faser beschrieben wird.

Aus EP 1 640 692 wiederum ist ein Verfahren zur Bewertung des Einflusses der Temperatur und der Dehnung eines Lichtwellenleiters auf das Spektrum eines an einem Bragg-Gitter reflektierten Lichtstrahls beschrieben. Auch EP 1 524 509 beschreibt Bragg-Gitter-Sensoren.

Die WO 2005/106396 beschreibt ein Mess-Verfahren zur Bestimmung der Brillouin Frequenz in verteilten optischen Sensorsystemen und US 7 573 565 beschreibt Methoden und Mess-Systeme zur Detektion der Dichte und/oder Temperatur von Flüssigkeiten.

Im Hinblick darauf ist es daher eine Aufgabe der vorliegenden Erfindung, ein Verfahren und eine Vorrichtung zur Messung einer Meßgröße bereitzustellen, die die genannten Nachteile zumindest teilweise überwinden.

Diese Aufgabe wird gelöst durch ein Verfahren zur Bestimmung einer Meßgröße gemäß Anspruch 1 sowie durch ein System gemäß Anspruch 8. Weitere Aspekte, Einzelheiten, Vorteile und Merkmale der vorliegenden Erfindung ergeben sich aus den Unteransprüchen, der Beschreibung sowie den beigefügten Zeichnungen.

Gemäß einem Ausführungsbeispiel der vorliegenden Erfindung umfaßt ein Verfahren zur Bestimmung mindestens einer Meßgröße mittels einer Sensorfaser die Schritte des Bereitstellens mindestens einer Sensorfaser, die an n, n > 1, vorbestimmten Positionen jeweils einen Sensor aufweist, der die mindestens eine Meßgröße mittels einer Änderung der am Sensor reflekierten Lichtleistung detektiert, des Bereitstellen einer Referenzübertragungsfunktion der Sensorfaser, wobei die Referenzübertragungsfunktion in einem vorbestimmten Ausgangszustand der Sensorfaser ermittelt wurde, des Durchführens von m ≥ n optischen Frequenzbereichsreflektometrie-Messungen bei m voneinander verschiedenen Meßfrequenzen zur Ermittlung von m Meßübertragungsfunktionen, des Ermittelns einer Änderung der reflektierten Lichtleistung an mindestens einer Sensorposition anhand der Referenzübertragungsfunktion und der Meßübertragungsfunktionen, und des Ermittelns mindestens eines Meßwertes der Meßgröße an mindestens einer Sensorposition anhand der ermittelten Änderung der reflektierten Lichtleistung an der Sensorposition.

Mit dem oben beschriebenen Verfahren sind sehr schnelle quasi-verteilte Messungen einer oder mehrerer Meßgrößen möglich, da jeweils nur n Frequenzen für n Sensoren gemessen werden müssen, d.h. man kommt mit der Meßwiederholrate in die Größenordnung von 1 kHz oder mehr. Auf diese Weise können insbesondere dynamische Vorgänge sehr gut erfaßt werden. Gleichzeitig liefert das Verfahren eine sehr hohe Genauigkeit. Die Genauigkeit der Messung läßt sich dabei erhöhen, wenn mehr Messungen vorgenommen werden, als Sensoren in der Sensorfaser vorhanden sind (m > n).

Im Gegensatz zu herkömmlichen Phasenauswertungsverfahren weist das vorliegende Verfahren einen stark erweiterten Meßbereich bei gleichzeitig großer Genauigkeit auf. Dabei ist die Präzision der Messung jedoch nicht, wie bei herkömmlichen Phasenauswertungsverfahren, von der maximalen Modulationsfrequenz abhängig, sondern lediglich von der Genauigkeit des verwendeten Gerätes zur Messung der Übertragungsfunktion. Daher stellt das vorliegende Verfahren vergleichsweise geringere Ansprüche an den Frequenzbereich der verwendeten Komponenten, wodurch kostengünstigere Komponenten verwendet werden können.

Gemäß einer Weiterbildung umfaßt das Bereitstellen der Referenzübertragungsfunktion das Durchführen einer Frequenzbereichsreflektometrie-Messung an der Sensorfaser im Ausgangszustand zur Ermittlung der Übertragungsfunktion der Sensorfaser im Frequenzbereich; das Ermitteln der Impulsantwort im Zeitbereich der Sensorfaser mittels inverser Fouriertransformation der Übertragungsfunktion; das Zerlegen der Impulsantwort in n Einzelimpulsfunktionen und eine Zeitbereich-Untergrundfunktion, die durch Subtraktion der Einzelimpulsfunktionen von der Impulsantwort erhalten wird; und das Durchführen einer Fouriertransformation für die n Einzelimpulsfunktionen und die Zeitbereich-Untergrundfunktion, um die Referenzübertragungsfunktion im Frequenzbereich als n Einzelsensorpositionsfunktionen und eine Frequenzbereich-Untergrundfunktion bereitzustellen.

Gemäß einer Ausführungsform können die Modulationsfrequenzen für die optischen Frequenzbereichsreflektometrie-Messungen im Bereich von 1 Hz bis 10 GHz liegen.

Wie bereits oben gesagt hängt die Genauigkeit der Messung von dem verwendeten Gerät zur Messung der Übertragungsfunktion ab. Beispielsweise können Netwerkanalysatoren im Frequenzbereich zwischen 1 Hz und 10 GHz verwendet werden. Wird eine hohe Genauigkeit angestrebt, so ist bei den Geräten eine kleine Filterbandbreite zu verwenden. Bei der genauen Messung sehr kurzer Abschnitte sind Geräte im Frequenzbereich über 10 GHz zu verwenden.

Gemäß noch einer Weiterbildung der Erfindung umfaßt das Ermitteln einer Änderung der reflektierten Lichtleistung das Subtrahieren der Frequenzbereich-Untergrundfunktion für eine jeweilige Meßfrequenz von der Meßübertragungsfunktion bei dieser Meßfrequenz; das Bestimmen einer Phase und eines Absolutwerts einer jeweiligen Einzelsensorpositionsfunktion, das Bestimmen der relativen Phasendifferenzen für eine jeweilige Meßfrequenz , und das Bestimmen eines Meßwerts der Meßgröße an einer Sensorposition mittels der Phasen, Absolutwerte und Verhältnisse der Einzelsensorpositionsfunktionen.

Die Meßfrequenzen sind frei wählbar und jede Kombination von Meßfrequenzen ergibt eine Lösung, so daß das beschriebene Verfahren sehr flexibel ist.

Gemäß einer Weiterbildung umfaßt das Bestimmen einer Brechzahl eines Mediums, das an einer Sensorposition mit der Sensorfaser in Kontakt steht, anhand der Absolutwerte der gemessenen Einzelsensorpositionsfunktion. Beispielsweise kann so das Medium über seine Brechzahl identifiziert werden.

Gemäß einer weiteren Ausführungsform kann weiterhin mindestens eine Reflektionsstelle in der Sensorfaser angeordnet sein, wobei eine örtliche Verschiebung der mindestens einen Reflektionsstelle anhand der Referenzübertragungsfunktion und der Meßübertragungsfunktionen ermittelt wird, und wobei eine Dehnung eines zu der mindestens einen Reflektionsstelle benachbarten Abschnitts der Sensorfaser anhand der ermittelten örtlichen Verschiebung der Reflektionsstelle bestimmt wird.

Zusätzlich zur Bestimmung der Meßgröße kann auf diese Weise auch die Dehnung der Faser berücksichtigt werden. Beispielsweise könnte in einem Deich das Vorhanden sein von Wasser sowie etwaige Spannungen oder Verschiebungen im Deich gleichzeitig mit einer einzigen Sensorfaser detektiert werden.

Gemäß noch einer Weiterbildung kann das Verfahren weiterhin eine optische Frequenzbereichsreflektometrie-Messung an einer Referenzsensorfaser oder einem Referenzabschnitt der Sensorfaser umfassen, um eine Temperaturabhängigkeit der optischen Frequenzbereichsreflektometrie-Messungen an der Sensorfaser zu ermitteln. Im Anschluß kann dann die Kompensation der ermittelten Temperaturabhängigkeit in der ermittelten Dehnung der Sensorfaser und/oder die Bestimmung der Temperatur mindestens eines Abschnitts der Sensorfaser erfolgen.

Auf diese Weise kann das Meßverfahren auch in Bereichen eingesetzt werden, die starken Temperaturschwankungen ausgesetzt sind.

Gemäß einem weiteren Aspekt der vorliegenden Erfindung umfaßt ein System zur Messung mindestens einer Meßgröße mittels einer Sensorfaser, eine Sensorfaser, die an n, n > 1, vorbestimmten Positionen jeweils einen Sensor aufweist, der eingerichtet ist, die mindestens eine Meßgröße mittels einer Änderung der am Sensor reflektierten Lichtleistung zu detektieren, eine mit der Sensorfaser verbundene Einrichtung zur Durchführung einer optischen Frequenzbereichsreflektometrie-Messung, und eine mit der Einrichtung verbundene Auswerteeinheit zur Ermittlung eines Meßwertes der mindestens einen Meßgröße, wobei das System, hier insbesondere die Auswerteeinheit, eingerichtet ist, eines der oben geschilderten Verfahren auszuführen.

Ein solches System kann die oben beschriebenen Vorteile des vorliegenden Dehnungsmeßverfahrens in geeigneter Weise verwirklichen.

Anhand der beigefügten Zeichnungen werden nun Ausführungsbeispiele der vorliegenden Erfindung erläutert. Dabei zeigt:

Fig. 1    eine schematische Darstellung eines Systems gemäß einem Ausführungsbeispiel der vorliegenden Erfindung.

Fig. 2    eine schematische Darstellung eines Systems gemäß einem weiteren Ausführungsbeispiel der vorliegenden Erfindung.

Fig. 3    ein Beispiel für eine Übertragungsfunktion der Sensorfaser im Frequenzbereich, die im Ausgangszustand der Sensorfaser ermittelt wurde.

Fig. 4    die aus der Übertragungsfunktion gemäß Fig. 3 ermittelte Impulsantwort im Zeitbereich.

Fig. 5    die Zerlegung der Impulsantwort in Einzelimpulsfunktionen.

Fig. 6    die Subtraktion der Einzelimpulsfunktionen von der Impulsantwort, um eine Zeitbereich-Untergrundfunktion zu erhalten.

Fig. 7    die aus den Einzelimpulsfunktionen mittels Fouriertransformation gewonnenen Einzelreflektionsstellenfunktionen im Frequenzbereich.

Fig. 8    die aus der Zeitbereich-Untergrundfunktion mittels Fouriertransformation gewonnene Frequenzbereich-Untergrundfunktion.

Fig. 9    eine parallele Brechzahlmessung an zwei Fasern.

Fig. 10   eine Messung eines zeitversetzten Übergangs von Luft zu Wasser an dem System gemäß Fig. 9.

Fig. 11   System gemäß einem Beispiel, bei dem gleichzeitig eine Messung der Brechzahl und der Dehnung vorgenommen werden kann.

Fig. 12   eine gleichzeitige Messung der Brechzahl und der Dehnung in dem System gemäß Fig. 11.

Fig. 13   eine schematische Darstellung eines Systems gemäß einem weiteren Ausführungsbeispiel der vorliegenden Erfindung, bei dem zusätzlich eine Dehnung der Sensorfaser erfaßt wird.

Fig. 14   eine schematische Darstellung eines Systems mit mehreren Sensorfasern.

Fig. 15   eine schematische Darstellung eines Systems mit Temperaturkompensation gemäß noch einem weiteren Ausführungsbeispiel der vorliegenden Erfindung.

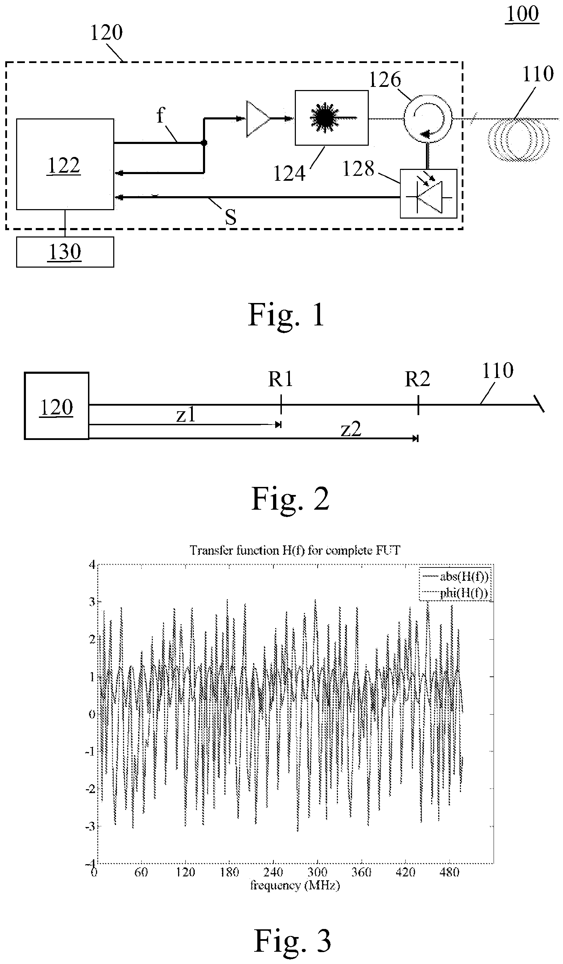

Die Fig. 1 zeigt eine schematische Darstellung eines Systems 100 gemäß einem Ausführungsbeispiel der vorliegenden Erfindung. Darin ist eine Sensorfaser 110 mit einer Einrichtung 120 zur Durchführung einer optischen Frequenzbereichsreflektometrie-Messung (OFDR-Messung) verbunden. Die Einrichtung 120 umfaßt ein Gerät zur Messung der komplexen Übertragungsfunktion 122, beispielsweise einen Netzwerkanalysator, typischerweise einen Vektor-Netzwerkanalysator, der mit einer Laserquelle 124, typischerweise einer Dauerstrich-Laserquelle, verbunden ist. Der Netzwerkanalysator 122 erzeugt ein sinusförmiges Ausgangssignal mit der Frequenz f. Mittels dieses Signals wird eine Amplitudenmodulation der Laserquelle 124 vorgenommen, wobei der Netzwerkanalysator 122 die Frequenz f in einem vorbestimmten Frequenzintervall mit vorgebbaren Frequenzschritten durchstimmen kann. Beispielsweise kann ein Frequenzintervall von 1 MHz bis 500 MHz in 1 MHz-Schritten durchlaufen werden. Das von der Laserquelle 124 abgegebene Licht wird über einen optischen Zirkulator 126 in die Sensorfaser 110 eingekoppelt. Der Zirkulator 126 koppelt weiterhin das in der Sensorfaser 110 reflektierte Signal aus und gibt dieses an eine Photodiode 128 weiter. Die Photodiode 128 wandelt das optische Signal vom Zirkulator 126 in ein elektrisches Signal um und gibt dieses Signal S an den Netzwerkanalysator 122 aus. Der Netzwerkanalysator 122 bestimmt nun anhand des Signals S die Übertragungsfunktion der Sensorfaser 110. Mit der Einrichtung 120, und typischerweise mit dem Netzwerkanalysator 122, ist eine Auswerteeinheit 130 zur Ermittlung einer Dehnung der Sensorfaser 110 verbunden. Die Auswerteeinheit 130 ist eingerichtet, ein Verfahren gemäß den Ausführungsbeispielen der vorliegenden auszuführen. Insbesondere kann die Auswerteeinheit 130 ein Computer sein, der programmtechnisch zur Ausführung eines solchen Verfahrens eingerichtet ist. Die Auswerteeinheit 130 kann mit einer Ausgabeeinheit (nicht gezeigt), beispielsweise einem Bildschirm oder einem Drucker, verbunden sein. Die von der Auswerteeinheit 130 ermittelte Dehnung kann dann auf der Ausgabeeinheit angezeigt bzw. ausgegeben werden.

In Fig. 2 ist eine schematische Darstellung eines Systems gemäß einem weiteren Ausführungsbeispiel der vorliegenden Erfindung gezeigt. Darin weist die Sensorfaser 110 an vorbestimmten Positionen $z_1$, $z_2$ jeweils einen Sensor R1, R2 auf. Die Sensorpositionen R1, R2 der Sensorfaser können beispielsweise durch Evaneszenzfeldsensoren gebildet sein. Gemäß weiteren Ausführungsbeispielen können auch zwei benachbarte Abschnitte der Sensorfaser mittels der Sensoren oder zumindest an der jeweiligen Sensorposition miteinander verbunden sein. Im Rahmen der vorliegenden Offenbarung werden also auch mehrere miteinander verbundene Fasern als eine Sensorfaser verstanden, da sie, wie im Ausführungsbeispiel der Fig. 2, eine gemeinsame Fasermeßstrecke bilden können. Die Sensorpositionen R1, R2 können jedoch auch anders gebildet sein. Beispielsweise können die Sensorpositionen R1, R2 durch bei oder nach der Herstellung der Sensorfaser durchgeführte Prozesse gebildet sein. Desweiteren kann auch das offene Ende der Sensorfaser 110 selbst als Sensor dienen, so es denn in einer Weise gestaltet ist, daß das Licht im wesentlichen reflektiert wird. Beispielsweise kann das Faserende einen 0°-Schliff aufweisen. Selbstverständlich ist die Anzahl und die Position der Sensoren in der Sensorfaser im wesentlichen frei wählbar. Es können also statt der in Fig. 2 gezeigten zwei Sensoren ganz allgemein n > 1 Sensoren in der Sensorfaser 110 vorgesehen sein.

Im Folgenden wird nun ein Verfahren zur Dehnungsmessung an der Sensorfaser 110 gemäß Fig. 2 beispielhaft erläutert. Dazu wird zunächst eine Referenzübertragungsfunktion der Sensorfaser bereitgestellt. Die Referenzübertragungsfunktion wurde in einem vorbestimmten Ausgangszustand der Sensorfaser ermittelt. Der Ausgangszustand der Faser ist so zu wählen, daß die zu ermittelnde Meßgröße in dem Ausgangszustand einen definierten Wert annimmt.

Wenn beispielsweise die Brechzahl eines Mediums, mit dem der Sensor in Kontakt steht, ermittelt werden soll, so könnte als Ausgangszustand der Sensor im Kontakt mit Luft gemessen werden. Zur Ermittlung der Referenzübertragungsfunktion wird zunächst eine OFDR-Messung an der Sensorfaser 110 im Ausgangszustand und nach Kalibrierung des Meßsystems vorgenommen. Anhand dieser Messung wird die Übertragungsfunktion H(f) der Sensorfaser im Frequenzbereich ermittelt. Das Ergebnis dieser Messung ist in Fig. 3 gezeigt, wobei sowohl Betrag als auch Phase der Übertragungsfunktion dargestellt sind.

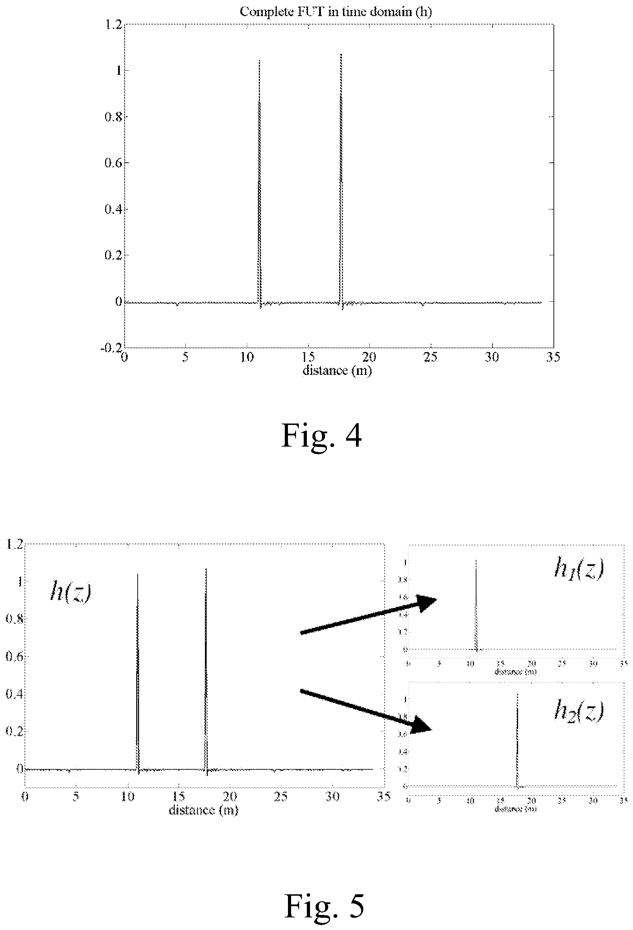

In einem nächsten Schritt wird nun aus der Übertragungsfunktion H(f) eine Impulsantwort im Zeitbereich ermittelt. Dazu wird die Übertragungsfunktion H(f) einer inversen Fouriertransformation unterworfen. Typischerweise wird die inverse Fouriertransformation als inverse Fast-Fouriertransformation ausgeführt. Die auf diese Weise erhaltene Impulsantwort h(z) im Zeitbereich ist in Fig. 4 gezeigt. Die beiden Sensorpositionen R1, R2 sind in der Impulsantwort h(z) deutlich erkennbar. Dabei ist zu erwähnen, daß die Signallaufzeiten mittels der Lichtgeschwindigkeit in der Sensorfaser direkt in Entfernungen umgerechnet wurden. Dennoch handelt es sich bei der Darstellung in Fig. 4 um eine Zeitbereichsdarstellung.

In einem nächsten Schritt wird nun die Impulsantwort h(z) in zwei Einzelimpulsfunktionen $h_1(z)$ und $h_2(z)$ zerlegt. Dies ist in Fig. 5 gezeigt. Dazu wird um jeden Einzelimpuls herum ein Bereich definiert (schraffierte Kasten in Fig. 5) und die Impulsantwort außerhalb dieser Bereiche gleich Null gesetzt. Auf diese Weise erhält man die jeweiligen Impulsantworten separat für $h_1(z)$ und $h_2(z)$. Beispielsweise treten typischerweise Überschwinger neben dem jeweiligen Hauptpeak eines Einzelimpulses auf. In diesem Fall kann beispielsweise auf jeder Seite des Einzelimpulses das Minimum zwischen dem Hauptpeak und dem erstem Seitenpeak bestimmt werden. Der Bereich des Einzelimpulses wäre dann zwischen diesen beiden Minima gelegen. Allerdings hat sich gezeigt, daß die Ergebnisse des vorliegenden Verfahrens robust gegenüber dem Ausschneidekriterium sind, so daß auch andere als das gerade beschriebene Kriterium zur Auswahl des Bereichs für einen jeweiligen Einzelimpuls herangezogen werden können. Die Zerlegung in Einzelimpulse erfolgt entsprechend, falls die Sensorfaser eine andere Anzahl als zwei Reflektionsstellen aufweist.

Hat man die Einzelimpulsfunktionen $h_r(z)$ isoliert, so wird anschließend eine Zeitbereich-Untergrundfunktion $h_0(z)$ durch Subtraktion der Einzelimpulsfunktionen $h_r(z)$ von der Impulsantwort h(z) erhalten.

$$h_0(z) = h(z) - \sum_{r=1}^{n} h_r(z)$$

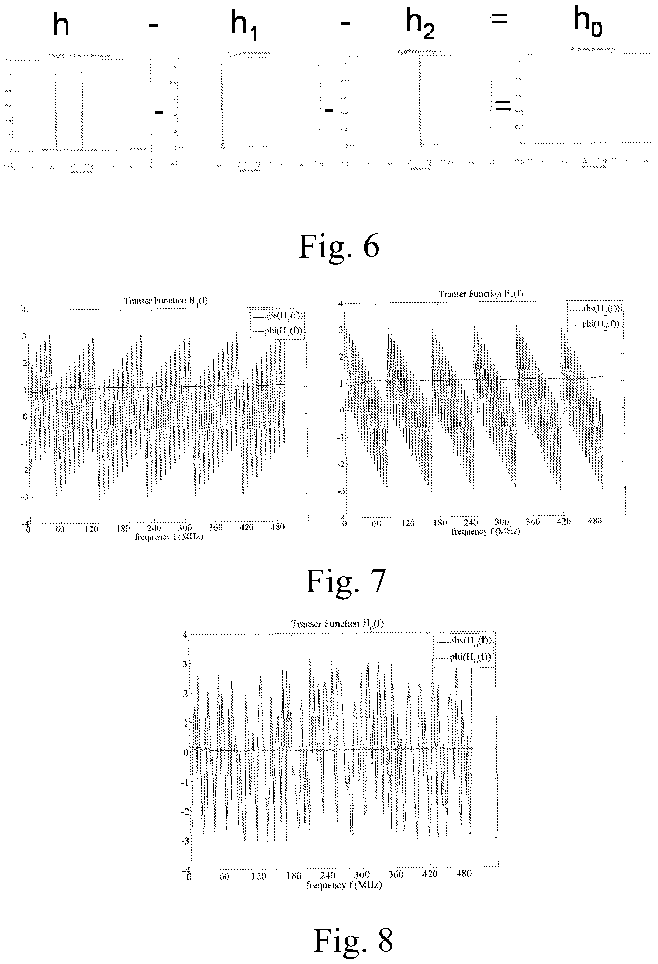

Dieser Vorgang sowie das Ergebnis sind in Fig. 6 veranschaulicht.

Die Ergebnisse von neuen Messung beliebiger Frequenzpunkte $M_k$ $k \in \{1,...,m\}$ der Frequenzen $f_k$ entsprechen - im Rahmen des Meßfehlers - der Summe der einzelnen Reflexe $H_{rk}$ und $H_{0k}$. Eine Laufzeitänderung, d.h. eine Längenänderung, bezüglich eines der Reflexe gegenüber der Ausgangsmessung bewirkt eine Änderung der Phasenlage $\Delta\varphi_r$ der jeweiligen Reflexionsstelle $R_r$. Die Phasenänderung $\Delta\varphi_r$ dient somit als Meßgröße für eine Längenänderung. Durch Aufstellen eines komplexwertigen Gleichungssystems mit $m=n$ Zeilen und $n$ Spalten lassen sich die Lösungen $e^{i\varphi_r}$ mit Betrags- und Phaseninformationen berechnen. Für die Bestimmung der Phasenlage und Beträge aller $n$ Reflexionsstellen in der Faser sind somit nur $n$ Messungen $M_{k=1...n}$ nötig. Zur Veranschaulichung ist unten beispielhaft ein Gleichungssystem für den speziellen Fall von zwei Sensoren R1, R2 gezeigt. Dabei wurden in dem System jeweils bei den Frequenzen $f_{k=1}$ und $f_{k=2}$ (wobei $f_k > f_{k-1}$ für $k=2..m$) Messungen durchgeführt:

$$\text{I} \quad M_1 - H_{0_{k=1}} \quad = |H_{11}|e^{i(\varphi_1)} \quad + |H_{21}|e^{i(\varphi_2)}$$

$$\text{II} \quad M_2 - H_{0_{k=2}} \quad = \left|H_{12}\right|e^{i(\varphi_1-\Delta_{12})} \quad + \left|H_{22}\right|e^{i(\varphi_2-\Delta_{22})}$$

Die beiden Gleichungen I und II des Gleichungssystems sind über die verschiedenen $\Delta_{rk}$ miteinander verknüpft. Dabei geben die $\Delta_{rk}$ jeweils die relative Phasenverschiebung an der Reflektionsstelle $R_r$ zur Messung mit der Frequenz $f_k$ gegenüber der Referenzmessung mit der Frequenz $f_{k=1}$ an. Die Größe $\Delta_{rk}$ ist abhängig von der Position des Reflexes $z_r$ und dem Frequenzunterschied $\Delta f = f_k - f_1$.

$$\Delta_{rk} = \frac{4\pi \cdot n_{gr} \cdot z_r \cdot \Delta f}{c_0} \quad ,$$

wobei $c_0$ die Lichtgeschwindigkeit und $n_{gr}$ den Brechungsindex der Sensorfaser bezeichnen. Für den allgemeinen Fall mit n Sensoren und m Meßfrequenzen ergibt sich das Gleichungssystem zu

$$
\begin{aligned}
f_k(k=1)\ \ \text{I}\ \ M_k - H_{0_k} \quad &= \left|H_{r=1;k=1}\right|e^{i(\varphi_{r=1})} \quad &&+\cdots+ \quad \left|H_{r=n;k=1}\right|e^{i(\varphi_{r=n})} \\
\vdots \quad\quad & \quad\quad \vdots \quad\quad &&+\ddots+ \quad \vdots \\
f_k(k=m)\ \ \text{II}\ \ M_{k=2} - H_{0_{k=2}} \quad &= \left|H_{r=1;k=m}\right|e^{i(\varphi_{r=1}-\Delta_{r=1;k=m})} \quad &&+\cdots+ \quad \left|H_{r=n;k=m}\right|e^{i(\varphi_{r=n}-\Delta_{r=n;k=m})}
\end{aligned}
$$

Dabei läßt sich durch Überbestimmung des Gleichungssystems auf m (m > n) Meßfrequenzen die Genauigkeit der Messung noch erhöhen.

Durch die Bereitstellung der komplexen Werte $M_r$ und die Verknüpfung der Ergebnisse über $\Delta_{rk}$ ergibt die Auflösung des Gleichungssystems nach $e^{i\varphi_r}$ die Phasen- und Betragswerte der einzelnen Sensoren bzw. Reflektionsstellen. Für die Auflösung des Gleichungssystems nach $e^{i\varphi_r}$ zur Bestimmung von $\varphi_r$ sind die Beträge $|H_r(f)|$ an sich irrelevant. Allerdings werden die Betragsrelationen $|H_r(f)|/|H_r(f=1)|$ zur Aufstellung des Gleichungssystems beibehalten, um ein korrektes Ergebnis zu erhalten. Dies kann man beispielsweise sicherstellen, indem man die Werte $|H_{rk}|$ der Referenzmessung übernimmt. Das Ergebnis der Auflösung nach $e^{i\varphi_r}$ ergibt bei Änderungen der reflektierten optischen Leistungen keinen Einheitsvektor ($|e^{i\varphi_r}|\neq1$), sondern einen von $|e^{i\varphi_r}|=1$ abweichenden Betrag, der proportional zur Änderung der jeweiligen reflektierten Leistungen ist. Durch Lösung des Gleichungssystems lassen sich somit neben der aktuellen Phasenlage der einzelnen Sensor- bzw. Reflektionsstellen auch die aktuelle reflektierte optische Leistung über $|H_r|\cdot|e^{i\varphi_r}|$ bestimmen. Die reflektierte optische Leistung ist proportional zu $|e^{i\varphi_r}|$. Phasenlage und Betrag der einzelnen Reflektionsstellen können somit gleichzeitig und unabhängig voneinander aus $e^{i\varphi_r}$ bestimmt werden. Anhand der Leistungsverluste an einer jeweiligen Sensorposition kann wiederum die Meßgröße, z.B. der Brechungsindex eines mit der Faser in Kontakt stehenden Materials, bestimmt werden, da die Verluste des Sensors in charakteristische Weise von der Meßgröße abhängen.

Beispielhaft wird dies nun für die Berechnung der aktuellen Brechzahlen $n_{mr}$ an einem Faserende durch die Verhältnisse von $|e^{i\varphi_r}|$ und $|e^{i\varphi_r}{}_{ref}|$ erläutert. Die Phasen $|e^{i\varphi_r}{}_{ref}|$ sind durch Referenzmessung an $n_{m,ref}$ bekannt und entsprechen den reflektierten optischen Leistungen R nach der Fresnelschen Formel für senkrechten Lichteinfall:

$$R = \left(\frac{n_{faser} - n_{medium}}{n_{faser} + n_{medium}}\right)^2 \qquad (1)$$

Zunächst wird der Referenzreflektionsbetrag $|e^{i\varphi_r}{}_{(ref)}|$ für bekannte Brechzahlen am Faserende $n_{mr,ref}$ (z.B. $n_{Luft}=1,0002739$) gemessen und mit dem theoretischen Reflektionskoeffizienten $R_{ref,r}$ für den Übergang Glas-Luft bei senkrechtem Lichteinfall ins Verhältnis gesetzt. Dabei ergibt sich ein Relationsfaktor zu

$$fak_r = \frac{R_{ref,r}}{\left|e^{i\varphi_r}{}_{(ref)}\right|} \qquad (2).$$

Der theoretische Reflektionskoeffizient für den Übergang Glas-Luft bei senkrechtem Lichteinfall ergibt sich zu

$$R_{ref,r} = \left( \frac{n_{faser} - n_{mr,ref}}{n_{faser} + n_{mr,ref}} \right)^2 \qquad (3).$$

Die Brechzahlen $n_{m,r}$ zum Zeitpunkt einer neuen Messung mit den Ergebnissen $|e^{i\varphi_r}|$ lassen sich nun direkt über die Verknüpfung von (1) und (2) wie folgt berechnen:

$$n_{m,r} = n_f \cdot \frac{1 - \sqrt{fak_r \cdot \left| e^{i\varphi_r} \right|}}{1 + \sqrt{fak_r \cdot \left| e^{i\varphi_r} \right|}} \qquad (4).$$

Dabei ergibt die Änderung des berechneten $\varphi_r$ gegenüber der zu Beginn bestimmten Phasenlage der Referenzmessung $H_{r;k=1}$ die Phasenverschiebung $\Delta\varphi_r$. Diese kann durch den folgenden Ausdruck bestimmt werden:

$$\Delta\varphi_r = \mathrm{atan2}\left( H_{r,k=1} \times e^{i\varphi_r}, H_{r,k=1} \bullet e^{i\varphi_r} \right)$$

Dabei ist die Funktion atan2 der Arcustangens mit zwei Argumenten, der wie folgt definiert ist:

$$\mathrm{atan2}(y, x) := \begin{cases} \arctan \frac{y}{x} & \text{für } x > 0 \\ \arctan \frac{y}{x} + \pi & \text{für } x < 0, \ y \geq 0 \\ \arctan \frac{y}{x} - \pi & \text{für } x < 0, \ y < 0 \\ +\pi/2 & \text{für } x = 0, \ y > 0 \\ -\pi/2 & \text{für } x = 0, \ y < 0 \\ 0 & \text{für } x = 0, \ y = 0 \end{cases}$$

Das erste Argument ist das Kreuzprodukt und das zweite Argument das Skalarprodukt zwischen $H_{r,k=1}$ und $e^{i\varphi_r}$.

Aus den so erhaltenen $\Delta\varphi_r$ lassen sich die Positionsänderungen $\Delta z_r$ mit sehr hoher Genauigkeit wie folgt berechnen:

$$\Delta z_r = \frac{c_0 \Delta\varphi_r}{4\pi n_{gr} f_{k=1}}$$

Aus diesen Positionsänderungen $\Delta z_r$ der Sensorpositionen bzw. Reflektionsstellen lassen sich dann anhand der ursprünglichen Längen und der Faserabschnitte die Dehnungswerte für einen oder mehrere Abschnitte der Sensorfaser ermitteln.

Zur Berechnung der $\Delta_{rk}$ wurde angenommen, daß die Sensoren $R_r$ jeweils an denselben Orten $z_r$ angeordnet sind wie bei der Referenzmessung. Da nun aber eine Dehnung der Sensorfaser angenommen wird, schlägt das Verfahren eine Iteration mit den neu berechneten Reflektionspositionen $z_r = z_r + \Delta z_r$ vor. Der Wert $z_r$ konvergiert typischerweise recht schnell und die Iteration kann insbesondere bei relativ kleinen Längenänderungen auch weggelassen werden. Gemäß einer Ausführungsform werden die iterierten Werte $n_{mr}$ und $\Delta\varphi_r$ in einer Programmschleife jeweils neu berechnet.

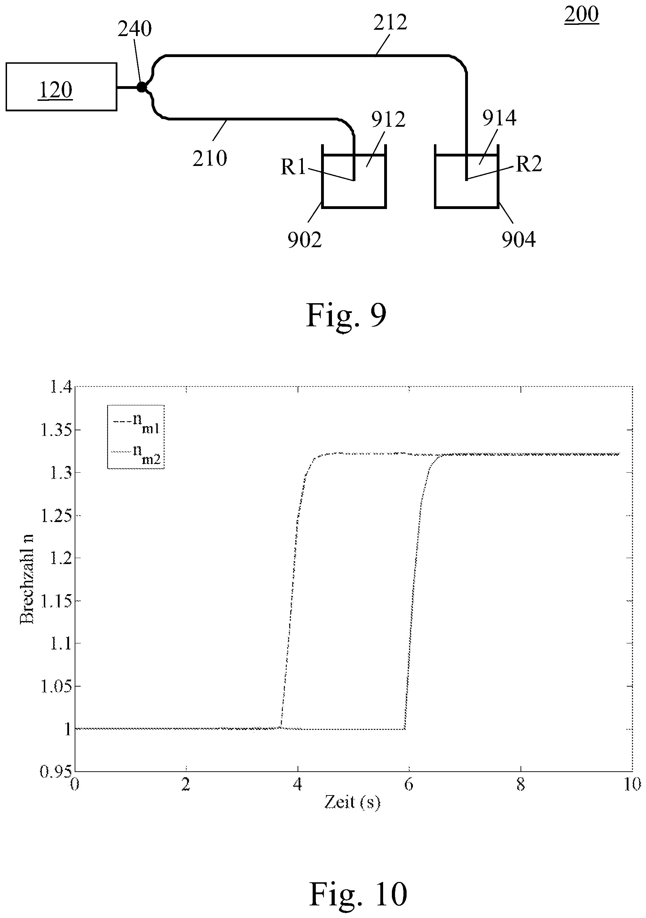

Zunächst wird im folgenden beispielhaft die Bestimmung der Brechzahl eines Mediums, das mit der Sensorfaser in Kontakt steht, erläutert. Das dazu verwendete System 200 ist schematisch in Fig. 9 gezeigt, das nicht Teil der Erfindung ist. Darin sind eine erste Sensorfaser 210 und eine zweite Sensorfaser 212 über einen Splitter 240 an ein OFDR-Gerät 120 angeschlossen. Bei beiden Sensorfasern 210, 212 weisen die jeweiligen Faserenden R1, R2 einen 0°-Winkel auf, so daß die jeweiligen Faserenden Reflektionsstellen bilden. Weiterhin sind in der Anordnung gemäß Fig. 9 zwei Behälter 902, 904 vorgesehen, die jeweils ein flüssiges Medium 912, 914, z.B. Wasser, enthalten. Die Faserenden R1, R2 sind jeweils in einen der Behälter 902, 904 geführt und dort in das flüssige Medium 912, 914 eingetaucht. Nun wird eine OFDR-Messung an den Sensorfasern durchgeführt. Auf diese Weise können die Brechzahlen der an den jeweiligen Faserenden R1, R2 anliegenden flüssigen Medien 912, 914 bestimmt werden. Dies kann zum einen dazu dienen, überhaupt das Vorhandensein eines anderen Mediums als Luft zu detektieren. Dieses Meßprinzip kann beispielsweise für einen Füllstanddetektor genutzt werden, wobei hier insbesondere bevorzugt ist, mehrere solcher Brechzahl-Sensoren entlang der Faser zu verteilen. Gemäß einem anderen Beispiel kann aber auch anhand der detektierten Brechzahl das Medium 912, 914 bestimmt werden.

In Fig. 10 ist eine Beispielmessung mit zwei Sensorfasern gemäß Fig. 9 gezeigt, wobei nach der Referenzmessung der beiden Faserenden an Luft zunächst das Faserende R1 der Sensorfaser 210 und etwa 2 s später das Faserende R2 der Sensorfaser 212 in Wasser ($n_{\lambda=1310nm} \approx 1.32$) getaucht wurden. Die Fig. 10 zeigt zum einen deutlich den Anstieg in der Brechzahl, wenn die jeweiligen Faserenden eingetaucht werden. Zum ist aber auch der zeitliche Versatz genau bestimmbar, so daß sich die Faser auch zur dynamischen Überwachung gut eignet.

Mit dem oben beschriebenen Verfahren sind sehr schnelle Messungen möglich, da jeweils nur n Frequenzen für n Sensoren gemessen werden müssen, d.h. man kommt mit der Meßwiederholrate in die Größenordnung von 1 kHz oder mehr. Auf diese Weise können insbesondere dynamische Vorgänge, beispielsweise in chemischen Reaktoren, sehr gut erfaßt werden. Die Genauigkeit der Messung läßt sich dabei erhöhen, wenn mehr Messungen vorgenommen werden, als Sensorpositionen in der Sensorfaser vorhanden sind (m > n).

Das Verfahren erlaubt darüber hinaus die gleichzeitige Messung von n Sensorpositionen in Reflexion. Daher kann von einer Seite der Faser aus gemessen werden und es muß auch nur eine Sensorfaser in der zu überwachenden Situation installiert werden.

Im Gegensatz zu herkömmlichen Phasenauswertungsverfahren weist das vorliegende Verfahren einen stark erweiterten Meßbereich bei gleichzeitig großer Genauigkeit auf. Dabei ist die Präzision der Messung jedoch nicht, wie bei herkömmlichen Phasenauswertungsverfahren, von der maximalen Modulationsfrequenz abhängig, sondern lediglich von der Genauigkeit des verwendeten Gerätes zur Messung der Übertragungsfunktion. Daher stellt das vorliegende Verfahren vergleichsweise geringere Ansprüche an den Frequenzbereich der verwendeten Komponenten, wodurch kostengünstigere Komponenten verwendet werden können.

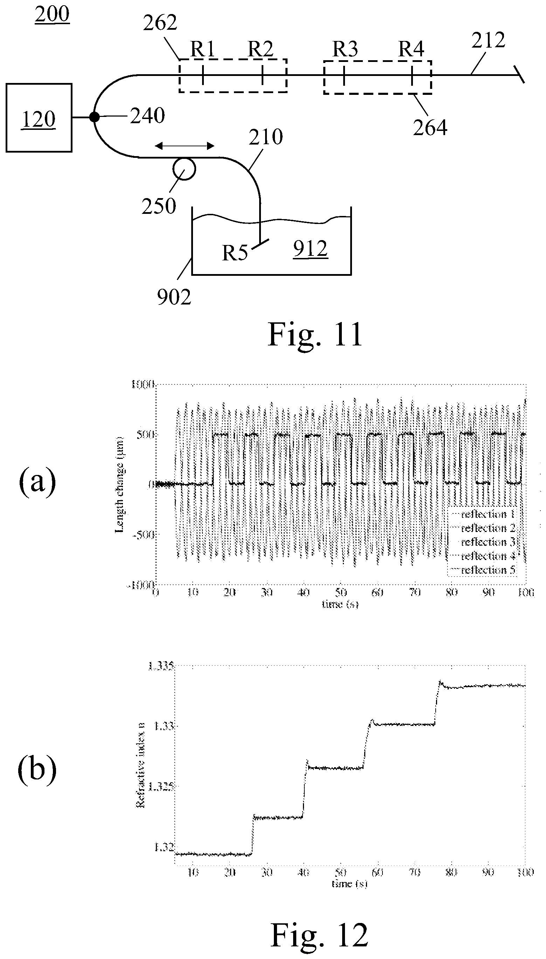

Wie bereits oben erläutert wurde, ist es gemäß dem vorgestellten Verfahren möglich, neben der durch den Sensor zu erfassenden Meßgröße gleichzeitig die Dehnung der Faser zu ermitteln. Dies wird im weiteren anhand des in Fig. 11 gezeigten Systems 200 gezeigt, der nicht Teil der Erfindung ist. Darin sind zwei Sensorfasern 210, 212 über einen optischen Splitter 240 mit einer OFDR-Meßeinheit 120 verbunden. Eine erste Sensorfaser 210 kann über einen Schrittmotor 250 um alternierend um jeweils 500 $\mu$m gedehnt werden. Weiterhin hängt das als Sensor R5 ausgebildete Ende der Faser 210 in einen Behälter 902, in dem sich ein flüssiges Medium 912 befindet. Die zweite Sensorfaser 212 ist mit vier Reflektionsstellen R1, R2, R3, R4 versehen. Die zweite Sensorfaser 212 ist auf einem 5 mm dicken Holzbrett 260 sowohl auf der Vorderseite 262 als auch auf der Rückseite 264 in einem vorgespannten Zustand befestigt.

Zur Demonstration der Leistungsfähigkeit des Systems 200 wird nun das Holzbrett, und damit die zweite Faser 212, in Schwingungen versetzt. Die Überlagerung der Reflektionsstellen R1 bis R4 ist in Fig. 12(a) gezeigt. Da die Faser 212 sowohl auf der Vorder- als auch auf der Rückseite des Holzbretts angeordnet ist, verlaufen die jeweiligen Schwingungen genau spiegelsymmetrisch zueinander. Die hervorragende Übereinstimmung der Meßkurven zeigt die Genauigkeit des Verfahrens. Gleichzeitig wird nun die Sensorfaser 210 mittels des Schrittmotors 210 in Intervallen von 5s alternierend gedehnt und entspannt. Die daraus resultierende Rechteckkurve ist ebenfalls in Fig. 12(a) gezeigt. Gleichzeitig wird nun in Abständen von jeweils 15 s der Flüssigkeit 912 eine bestimmte Menge an Zuckerlösung zugesetzt. Dadurch ändert sich jeweils der Brechungsindex der Flüssigkeit 912 schrittweise.

Dies ist in Fig. 12(b) gezeigt. Somit erlaubt das Verfahren gemäß den Ausführungsbeispielen der vorliegenden Erfindung die gleichzeitige Bestimmung der Faserdehnung und einer Meßgröße, hier beispielhaft der Brechungsindex, mittels nur eines einzigen Sensors. Wie anhand der Faser 212 demonstriert ist es weiterhin möglich, mehrere Sensorpositionen in einer Faser zu vermessen, so daß nicht nur gleichzeitig die Dehnung in verschiedenen Faserabschnitten sondern auch eine Meßgröße an verschiedenen Stellen der Faser und/oder verschiedene Meßgrößen an verschiedenen Stellen der Faser ermittelt werden können.

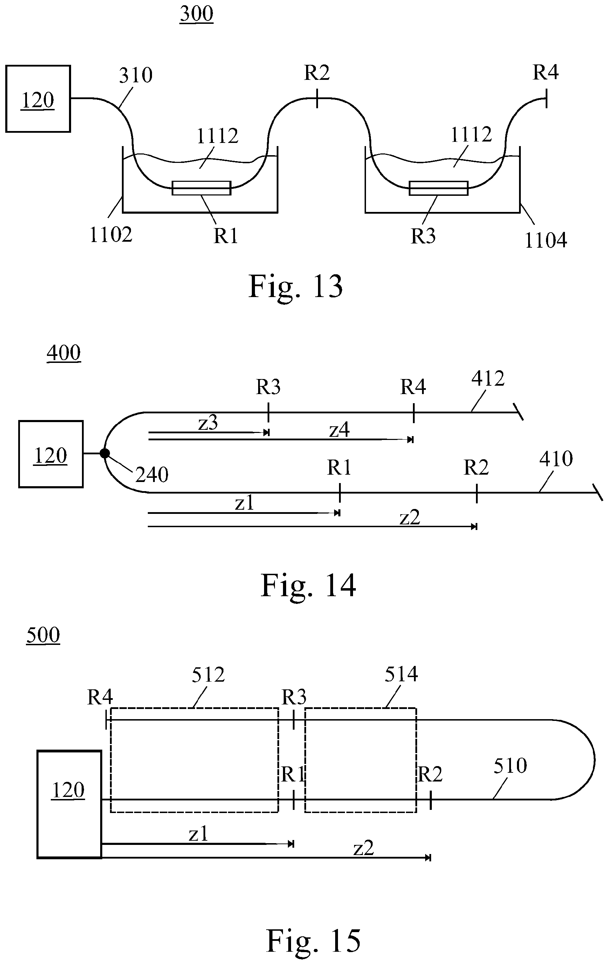

In Fig. 13 ist eine schematische Darstellung eines Systems 300 gemäß einem weiteren Ausführungsbeispiel der vorliegenden Erfindung gezeigt. Das System 300 ist ebenfalls ausgelegt, gleichzeitig eine Dehnung der Sensorfaser 310 sowie eine Meßgröße, z.B. eine chemische Größe, zu erfassen. Die Sensorfaser 310 ist wie üblich mit einer OFDR-Einheit 120 verbunden und weist beispielsweise zwei chemische Sensoren R1, R3 auf. Die chemischen Sensoren R1, R2 können beispielsweise durch eine spezielle Beschichtung der Faseroberfläche gebildet sein. In anderen Ausführungsformen der Erfindung können die Sensoren R1, R2 als Evaneszenzfeldsensoren ausgebildet sein. Sensoren der genannten Art sind im Stand der Technik bekannt, weshalb hier nicht weiter auf die genaue Ausgestaltung der Sensoren eingegangen wird. Gemeinsam ist all diesen Sensoren, daß sie zu einer Veränderung in der Lichtleistung in Abhängigkeit einer zu detektierenden Meßgröße am Ort des Sensors führen. Die Sensoren R1, R3 sind beispielhaft jeweils flüssigen Medien 1112, 1114 ausgesetzt, die in jeweiligen Behältern 1102, 1104 vorgehalten sind. Weiterhin umfaßt die Sensorfaser 310 Reflektionsstellen R2, R4. Die Reflektionsstelle R2 der Sensorfaser 310 kann beispielsweise durch einen Steckverbinder, insbesondere solche mit 0°-Schliff, gebildet sein, wobei der Steckverbinder zwei benachbarte Abschnitte der Sensorfaser 310 miteinander verbindet. Desweiteren bildet auch das offene Ende der Sensorfaser 310 selbst eine Reflektionsstelle, so es denn in einer Weise gestaltet ist, daß das Licht im wesentlichen reflektiert wird. Beispielsweise kann das Faserende einen 0°-Schliff aufweisen und/oder verspiegelt sein. Eine Dehnung der Sensorfaser 310 kann nun über die örtliche Verschiebung der Reflektionsstellen R2, R4 wie oben erläutert detektiert werden.

In Fig.14 ist eine schematische Darstellung eines Systems 400 mit mehreren Sensorfasern gezeigt, das nicht Teil der Erfindung ist. Dabei umfaß das System eine erste Sensorfaser 410 und eine zweite Sensorfaser 412. Die erste Sensorfaser 410 weist eine erste Sensorposition R1 im Abstand $z_1$ und eine zweite Sensorposition R2 im Abstand $z_2$ auf. Die zweite Sensorfaser 212 weist eine dritte Sensorposition R3 im Abstand $z_3$ und eine vierte Sensorposition R4 im Abstand $z_4$ auf. Die Sensorposition en R1, R2, R3, R4 in der ersten und der zweiten Sensorfaser 210, 212 sind so angeordnet, daß ihre jeweilige Positionen $z_1$, $z_2$, $z_3$, $z_4$ voneinander so verschieden sind, daß auch bei maximaler Dehnung der Sensorfasern 210, 212 die Positionen $z_1$, $z_2$, $z_3$, $z_4$ unterscheidbar sind. Beispielsweise kann $z_1 = 100$ m, $z_2 = 200$ m, $z_3 = 50$ m und $z_4 = 150$ m sein. Auf diese Weise können die Einzelimpulse eindeutig den jeweiligen Sensorposition zugeordnet werden, selbst wenn die erste und die zweite Sensorfaser jeweils maximal und in entgegengesetzter Richtung gedehnt sind. Die erste und die zweite Sensorfaser 210, 212 sind über einen optischen Koppler bzw. einen optische Splitter 240 mit der Einrichtung 120 zur OFDR-Messung verbunden. Mittels des Kopplers/Splitters 240 ist ein Multiplexen der Signale in der ersten Faser 210 und der zweiten Faser 212 möglich. Aufgrund des hinreichenden Abstands zwischen den Reflektionsstellen können diese jedoch eindeutig zugeordnet werden.

Die Fig.15 zeigt eine schematische Darstellung eines Systems 500 mit Temperaturkompensation gemäß noch einem weiteren Ausführungsbeispiel der vorliegenden Erfindung. Bei langen Meßstrecken bzw. bei Anwendungen, bei denen starke Temperaturänderungen auftreten können, ist die Genauigkeit der Messung im Grunde durch Temperatureinflüsse begrenzt. Die thermische Ausdehnung der Faser bzw. des Mantelmaterials oder des Kabels sowie die Temperaturabhängigkeit des Brechungsindex der Faser haben Auswirkung auf die gemessene Veränderung der Phase an den jeweiligen Sensorstellen. Eine Temperaturkompensation zur Trennung des Temperatureinflusses auf die Meßgröße ist durch die im wesentlichen parallele Installation einer Faser gleichen Typs mit Längenreserve zu erreichen. Aufgrund der Längenreserve tritt keine Dehnung der Sensorfaser ein, so daß in diesen Fasern oder Faserabschnitten ausschließlich der temperaturinduzierte Effekt gemessen wird.

Daher weist das System 500 gemäß Fig. 15 Referenzabschnitte 512, 514 der Sensorfaser 510 auf, die im wesentlichen parallel zur Sensorfaser 510 verlaufen, dieselbe Temperatur aufweisen aber nicht mit dem zu messenden Medium in Kontakt stehen. Dabei dient der Referenzabschnitt 512 zwischen einer dritten und einer vierten Sensorposition R3, R4 der Sensorfaser 510 als Temperaturreferenz zum Meßabschnitt zwischen $z_0$ und $z_1$, d.h. dem Faserabschnitt bis zur ersten Sensorposition R1. Gleichermaßen dient der Referenzabschnitt 514 zwischen der zweiten und der dritten Sensorposition R2, R3 der Sensorfaser 510 als Temperaturreferenz zum Meßabschnitt zwischen $z_1$ und $z_2$, d.h. dem Faserabschnitt der ersten Sensorposition R1 und der zweiten Sensorposition R2. Aufgrund der so ermittelten Temperaturabhängigkeit kann die ermittelte Meßgröße entsprechend temperaturkompensiert werden. Dabei kann die gemessene Phasenänderung des Referenzabschnitts auf die jeweiligen zugeordneten Dehnungsmeßabschnitte der Sensorfaser normiert werden. Zusätzlich oder alternativ kann aufgrund der Referenzabschnitte auch die Temperatur eines jeweiligen Abschnitts der Sensorfaser 510 ermittelt werden.

Die vorliegende Erfindung wurde anhand von Ausführungsbeispielen erläutert. Diese Ausführungsbeispiele sollten keinesfalls als einschränkend für die vorliegende Erfindung verstanden werden.

**Patentansprüche**

1.   Verfahren zur Bestimmung mindestens einer Meßgröße mittels einer einzelnen Sensorfaser, umfassend die Schritte:

(a) Bereitstellen mindestens einer Sensorfaser, die an n, n> 1, vorbestimmten Positionen $(z_r)$ jeweils einen Sensor aufweist, der die mindestens eine Meßgröße mittels einer Änderung der am Sensor reflektierten Lichtleistung detektiert;

(b) Bereitstellen einer Referenzübertragungsfunktion $(H_0, H_r)$ der Sensorfaser, wobei die Referenzübertragungsfunktion $(H_0, H_r)$ in einem vorbestimmten Ausgangszustand der Sensorfaser ermittelt wurde;

(c) Durchführen von $m \geq n$ optischen Frequenzbereichsreflektometrie-Messungen bei m voneinander verschiedenen Meßfrequenzen $(f_k)$ zur Ermittlung von m Meßübertragungsfunktionen $(M_k)$;

(d) Ermitteln einer Änderung der reflektierten Lichtleistung an mindestens einer Sensorposition anhand der Referenzübertragungsfunktion ($H_0$, $H_r$) und der Meßübertragungsfunktionen ($M_k$); und

(e) Ermitteln mindestens eines Meßwertes der Meßgröße an mindestens einer Sensorposition anhand der ermittelten Änderung der reflektierten Lichtleistung an der Sensorposition.

2. Verfahren nach Anspruch 1, wobei Schritt (b) weiterhin umfaßt:

(b1) Durchführen einer Frequenzbereichsreflektometrie-Messung an der Sensorfaser im Ausgangszustand zur Ermittlung der Übertragungsfunktion ($H(f)$) der Sensorfaser im Frequenzbereich;

(b2) Ermitteln der Impulsantwort ($h(z)$) im Zeitbereich der Sensorfaser mittels inverser Fouriertransformation der Übertragungsfunktion ($H(f)$);

(b3) Zerlegen der Impulsantwort ($h(z)$) in n Einzelimpulsfunktionen ($h_k(z)$) und eine Zeitbereich-Untergrundfunktion ($h_0(z)$), die durch Subtraktion der Einzelimpulsfunktionen ($h_k(z)$) von der Impulsantwort ($h(z)$) erhalten wird; und

(b4) Durchführen einer Fouriertransformation für die n Einzelimpulsfunktionen ($h_k(z)$) und die Zeitbereich-Untergrundfunktion ($h_0(z)$), um die Referenzübertragungsfunktion im Frequenzbereich als n Einzelsensorpositionsfunktionen ($H_k(f)$) und eine Frequenzbereich-Untergrundfunktion ($H_0(f)$) bereitzustellen.

3. Verfahren nach einem der vorhergehenden Ansprüche, wobei in Schritt (c) die Modulationsfrequenzen ($f_k$) für die optischen Frequenzbereichsreflektometrie-Messungen im Bereich von 1 Hz bis 10 GHz liegen.

4. Verfahren nach einem der vorhergehenden Ansprüche, wobei Schritt (d) umfaßt:

(d1) Subtrahieren der Frequenzbereich-Untergrundfunktion ($H_0(f_k)$) für eine jeweilige Meßfrequenz ($f_k$) von der Meßübertragungsfunktion ($M_k$) bei dieser Meßfrequenz;

(d2) Bestimmen einer Phase ($\varphi_r$) und eines Absolutwerts ($|H_r| \cdot |e^{i\varphi_r}|$) einer jeweiligen Einzelsensorpositionsfunktion; und

(d3) Bestimmen der relativen Phasendifferenzen ($\Delta_{rk}$) für eine jeweilige Meßfrequenz ($f_k$), und

(d4) Bestimmen eines Meßwerts der Meßgröße an einer Sensorposition mittels der Phasen, Absolutwerte und Verhältnisse der Einzelsensorpositionsfunktionen.

5. Verfahren nach einem der vorhergehenden Ansprüche, weiterhin umfassend das Bestimmen einer Brechzahl eines Mediums, das an einer Sensorposition mit der Sensorfaser in Kontakt steht, anhand der Absolutwerte der gemessenen Einzelsensorpositionsfunktion ($|H_r| \cdot |e^{i\varphi_r}|$).

6. Verfahren nach einem der vorhergehenden Ansprüche, wobei eine örtliche Verschiebung ($\Delta z_r$) der Sensorposition anhand der Referenzübertragungsfunktion ($H_0$, $H_r$) und der Meßübertragungsfunktionen ($M_k$) ermittelt wird, und wobei eine Dehnung eines zu dem mindestens einen Sensor benachbarten Abschnitts der Sensorfaser anhand der ermittelten örtlichen Verschiebung ($\Delta z_r$) der Sensorposition bestimmt wird.

7. Verfahren nach einem der vorhergehenden Ansprüche, weiterhin umfassend:

(f) eine optische Frequenzbereichsreflektometrie-Messung an einer Referenzsensorfaser oder einem Referenzabschnitt der Sensorfaser, um eine Temperaturabhängigkeit der optischen Frequenzbereichsreflektometrie-Messungen an der Sensorfaser zu ermitteln; und

(f1) Kompensation der ermittelten Temperaturabhängigkeit in der ermittelten Dehnung der Sensorfaser; und/oder

(f2) Bestimmung der Temperatur mindestens eines Abschnitts der Sensorfaser.

8. System zur Messung mindestens einer Meßgröße mittels einer einzigen Sensorfaser, umfassend eine Sensorfaser (110), die an n, n > 1, vorbestimmten Positionen ($z_r$) jeweils einen Sensor (R1, R2) aufweist, der eingerichtet ist, die mindestens eine Meßgröße mittels einer Änderung der am Sensor reflektierten Lichtleistung zu detektieren, eine mit der Sensorfaser (110) verbundene Einrichtung (120) zur Durchführung einer optischen Frequenzbereichsreflektometrie-Messung, und eine mit der Einrichtung (120) verbundene Auswerteeinheit (130) zur Ermittlung eines Meßwertes der mindestens einen Meßgröße, wobei das System eingerichtet ist, ein Verfahren gemäß einem der vorhergehenden Ansprüche auszuführen.

9. Vorrichtung nach Anspruch 8, wobei das Ende der Sensorfaser (110) einen 0°-Schliff aufweist, oder der Sensor (R1, R2) einen Faserabschnitt ohne optischen Mantel und/oder einen Evaneszenzfeldsensor umfaßt.

**Claims**

1. A process for determining at least one measured variable by means of a single sensor fiber, comprising the steps:

   (a) Providing at least one sensor fiber that has, at each of n predetermined positions ($z_r$), where n > 1, one sensor, that detects the at least one measured variable by means of a change in the light power reflected on the sensor;
   (b) Providing a reference transfer function ($H_0$, $H_r$) of the sensor fiber, the reference transfer function ($H_0$, $H_r$) being determined in a predetermined initial state of the sensor fiber;
   (c) Performing m ≥ n optical frequency domain reflectometry measurements at m measurement frequencies ($f_k$) that are different from one another to determine m measurement transfer functions ($M_k$);
   (d) Determining a change in the reflected light power at least at one sensor position on the basis of the reference transfer function ($H_0$, $H_r$) and the measurement transfer functions ($M_k$); and
   (e) Determining at least one measured value of the measured variable at least at one sensor position on the basis of the determined change in the reflected light power at the sensor position.

2. A process according to claim 1, wherein step (b) further comprises:

   (b1) Performing a frequency domain reflectometry measurement on the sensor fiber in the initial state to determine the transfer function (H(f)) of the sensor fiber in the frequency domain;
   (b2) Determining the pulse response (h(z)) in the time domain of the sensor fiber by means of an inverse Fourier transform of the transfer function (H(f));
   (b3) Decomposing the pulse response (h(z)) into n individual pulse functions ($h_k$(z)) and a time-domain background function ($h_0$(z)) that is obtained by subtracting the individual pulse functions ($h_k$(z)) from the pulse response (h(z)); and
   (b4) Performing a Fourier transform for the n individual pulse functions ($h_k$(z)) and the time-domain background function ($h_0$(z)), in order to obtain the reference transfer function in the frequency domain in the form of n individual sensor position functions ($H_k$(f)) and a frequency-domain background function ($H_0$(f)).

3. A process according to any one of the preceding claims, wherein the modulation frequencies ($f_k$) for the optical frequency domain reflectometry measurements in step (c) lie in the range from 1 Hz to 10 GHz.

4. A process according to any one of the preceding claims, wherein step (d) comprises:

   (d1) Subtracting the frequency-domain background function ($H_0$($f_k$)) for a respective measurement frequency ($f_k$) from the measurement transfer function ($M_k$) at this measurement frequency;
   (d2) Determining a phase ($\varphi_r$) and an absolute value ($|H_r \cdot e^{i\varphi_r}|$) of a respective individual sensor position function; and
   (d3) Determining the relative phase differences ($\Delta_{rk}$) for a respective measurement frequency ($f_k$), and
   (d4) Determining a measured value of the measured variable at a sensor position by means of the phases, absolute values, and ratios of the individual sensor position functions.

5. A process according to any one of the preceding claims that further comprises determining a refractive index of a medium that is in contact with the sensor fiber at a sensor position, on the basis of the absolute values of the measured individual sensor position function ($|H_r \cdot e^{i\varphi_r}|$).

6. A process according to any one of the preceding claims, wherein a local displacement ($\Delta z_r$) of the sensor position is determined on the basis of the reference transfer function ($H_0$, $H_r$) and the measurement transfer function ($M_k$), and wherein a strain of a section of the sensor fiber adjacent to the at least one sensor is determined on the basis of the determined local displacement ($\Delta z_r$) of the sensor position.

7. A process according to any one of the preceding claims, further comprising:

   (f) making an optical frequency domain reflectometry measurement on a reference sensor fiber or a reference section of the sensor fiber, to determine a temperature dependence of the optical frequency domain reflectometry measurements on the sensor fiber; and

(f1) Compensating the determined temperature dependence in the determined strain of the sensor fiber; and/or
(f2) Determining the temperature of at least one section of the sensor fiber.

**8.** A system for measuring at least one measured variable by means of a single sensor fiber, comprising
a sensor fiber (110) that has, at each of n predetermined positions ($z_r$), where n > 1, one sensor (R1, R2), that is set up to detect the at least one measured variable by means of a change in the light power reflected on the sensor;
a device (120) connected with the sensor fiber (110) to perform an optical frequency domain reflectometry measurement; and
an evaluation unit (130) connected with the device (120) to determine a measured value of the at least one measured variable,
the system being set up to perform a process according to one of the preceding claims.

**9.** A device according to claim 8, wherein the end of the sensor fiber (110) has a 0° polished surface, or the sensor (R1, R2) comprises a fiber section without optical cladding and/or an evanescent field sensor.

**Revendications**

**1.** Procédé de détermination d'au moins une grandeur de mesure au moyen d'une fibre de capteur individuelle, comportant les étapes suivantes :

(a) la fourniture d'au moins une fibre de capteur qui présente, dans n, n>1, des positions ($z_r$) prédéfinies respectivement, un capteur qui détecte la au moins une grandeur de mesure au moyen d'une modification de la puissance lumineuse réfléchie sur le capteur ;
(b) la fourniture d'une fonction de transmission de référence ($H_0$, $H_r$) de la fibre de capteur, dans lequel la fonction de transmission de référence ($H_0$, $H_r$) a été déterminée dans un état de départ prédéfini de la fibre de capteur ;
(c) l'exécution de m ≥ n mesures de réflectométrie optique dans le domaine fréquentiel pour m mesures de fréquence ($f_k$) différentes les unes des autres pour la détermination de m fonctions de transmission de mesure ($M_k$) ;
(d) la détermination d'une modification de la puissance lumineuse réfléchie dans au moins une position de capteur sur la base de la fonction de transmission de référence ($H_0$, $H_r$) et des fonctions de transmission de mesure ($M_k$) ; et
(e) la détermination d'au moins une valeur de mesure de la grandeur de mesure dans au moins une position de capteur sur la base de la modification déterminée de la puissance lumineuse réfléchie dans la position de capteur.

**2.** Procédé selon la revendication 1, dans lequel l'étape (b) comporte en outre :

(b1) l'exécution d'une mesure de réflectométrie dans le domaine fréquentiel sur la fibre de capteur dans l'état de départ pour la détermination de la fonction de transmission (H(f)) de la fibre de capteur dans le domaine fréquentiel ;
(b2) la détermination de la réponse impulsionnelle (h(z)) dans le domaine temporel de la fibre de capteur au moyen d'une transformée de Fourier inverse de la fonction de transmission (H(f)) ;
(b3) le découpage de la réponse impulsionnelle (h(z)) en n fonctions impulsionnelles individuelles ($h_k$(z)) et en une fonction d'arrière-plan dans le domaine temporel ($h_0$(z)), qui est obtenue par soustraction des fonctions impulsionnelles individuelles ($h_k$(z)) de la réponse impulsionnelle (h(z)) ; et
(b4) l'exécution d'une transformée de Fourier pour les n fonctions impulsionnelles individuelles ($h_k$(z)) et la fonction d'arrière-plan dans le domaine temporel ($h_0$(z)), afin de fournir la fonction de transmission de référence dans le domaine fréquentiel en tant que n fonctions de position de capteur individuelles ($H_k$(f)) et une fonction d'arrière-plan dans le domaine fréquentiel ($H_0$(f)).

**3.** Procédé selon l'une quelconque des revendications précédentes, dans lequel, à l'étape (c), les fréquences de modulation ($f_k$) pour les mesures de réflectométrie optique dans le domaine fréquentiel se situent dans le domaine de 1 Hz à 10 GHz.

**4.** Procédé selon l'une quelconque des revendications précédentes, dans lequel l'étape (d) comporte :

(d1) la soustraction de la fonction d'arrière-plan dans le domaine fréquentiel ($H_0(f_k)$) pour une fréquence de mesure ($f_k$) respective de la fonction de transmission de mesure ($M_k$) à cette fréquence de mesure ;
(d2) la détermination d'une phase ($\varphi_r$) et d'une valeur absolue ($|H_r| \cdot |e^{i\varphi_r}|$) d'une fonction de position de capteur individuelle respective ; et
(d3) la détermination des différences de phase ($\Delta_{rk}$) relatives pour une fréquence de mesure ($f_k$) respective, et
(d4) la détermination d'une valeur de mesure des grandeurs de mesure dans une position de capteur au moyen des phases, des valeurs absolues et des rapports des fonctions de position de capteur individuelles.

**5.** Procédé selon l'une quelconque des revendications précédentes, comprenant en outre la détermination d'un indice de réfraction d'un milieu, qui est en contact dans une position de capteur avec la fibre de capteur, sur la base des valeurs absolues de la fonction de position de capteur individuelle ($|H_r| \cdot |e^{i\varphi_r}|$) mesurée.

**6.** Procédé selon l'une quelconque des revendications précédentes, dans lequel un décalage local ($\Delta z_r$) de la position de capteur est déterminé sur la base de la fonction de transmission de référence ($H_0$, $H_r$) et des fonctions de transmission de mesure ($M_k$), et dans lequel une extension d'une partie de la fibre de capteur, laquelle partie est voisine du au moins un capteur, est définie sur la base du décalage local ($\Delta z_r$) déterminé de la position de capteur.

**7.** Procédé selon l'une quelconque des revendications précédentes, comprenant en outre :

(f) une mesure de réflectométrie optique dans le domaine fréquentiel sur une fibre de capteur de référence ou une partie de référence de la fibre de capteur, afin de déterminer une dépendance en température des mesures de réflectométrie optique dans le domaine fréquentiel sur la fibre de capteur ; et
(f1) la compensation de la dépendance en température déterminée dans l'extension déterminée de la fibre de capteur ; et/ou
(f2) la détermination de la température d'au moins une partie de la fibre de capteur.

**8.** Système de mesure d'au moins une grandeur de mesure au moyen d'une seule fibre de capteur, comportant
une fibre de capteur (110) qui présente, dans n, n > 1, des positions ($z_r$) prédéfinies respectivement, un capteur (R1, R2) qui est conçu pour détecter au moins une grandeur de mesure au moyen d'une modification de la puissance lumineuse réfléchie sur le capteur,
un équipement (120) relié à la fibre de capteur (110) pour l'exécution d'une mesure de réflectométrie optique dans le domaine fréquentiel, et
une unité d'évaluation (130) reliée à l'équipement (120) pour la détermination d'une valeur de mesure de la au moins une grandeur de mesure,
dans lequel le système est conçu pour exécuter un procédé selon l'une quelconque des revendications précédentes.

**9.** Dispositif selon la revendication 8, dans lequel l'extrémité de la fibre de capteur (110) présente un affûtage à 0°, ou le capteur (R1, R2) comporte une partie de fibre sans enveloppe optique et/ou un capteur à champ évanescent.

Fig. 1

Fig. 2

Fig. 3

Fig. 4

Fig. 5

$$h \quad - \quad h_1 \quad - \quad h_2 \quad = \quad h_0$$

## Fig. 6

## Fig. 7

## Fig. 8

Fig. 9

Fig. 10

Fig. 11

(a)

(b)

Fig. 12

300

Fig. 13

400

Fig. 14

500

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007131794 A
- US 2009240455 A
- WO 2007149230 A
- EP 1640692 A
- EP 1524509 A
- WO 2005106396 A
- US 7573565 B

**In der Beschreibung aufgeführte Nicht-Patentliteratur**

- **GARUS et al.** Brillouin optical-fiber frequency-domain analysis for distributed temperature and strain measurements. *Journal of Lightwave Technology,* 1997, vol. 15 (4), 654-662
- **BERNINI et al.** Distributed fiber-optic frequency-domain Brillouin sensing. *Sensors and Actuators A: Physical, Vol. 123-124, Eurosensors XVIII 2004 - The 18th European conference on Solid-State Transducers,* 2005, vol. 123-124, 337-342
- **ARNOLD.** Fiber-Optic Chemical Sensors. *Anal. Chem.,* November 1992, vol. 64 (21), 1015-1025
- **SAUNDERS ; SCULLY.** Sensing application for POF and hybrid fibres using a photon counting OTDR. *Meas. Sci. Technol.,* 2007, vol. 18, 615-622